# EUROPÄISCHE PATENTSCHRIFT

(11) **EP 2 442 080 B1**
(45) Veröffentlichungstag und Bekanntmachung des Hinweises auf die Patenterteilung: **14.09.2022**
(21) Anmeldenummer: 11183490.9
(22) Anmeldetag: 30.09.2011
(51) Int. Cl.: G01F 23/292, G01N 21/90

(54) **Vorrichtung und Verfahren zur Inspektion von Behältern**
Method and device for inspecting containers
Dispositif et procédé destinés à l'inspection de récipients

(30) Priorität: 12.10.2010 DE 102010042331; 10.03.2011 DE 102011013551
(43) Veröffentlichungstag der Anmeldung: 18.04.2012
(73) Patentinhaber: Krones AG, 93073 Neutraubling (DE)
(72) Erfinder: Aichinger, Karl, 94526 Metten (DE); Brunner, Xaver, 93093 Donaustauf (DE)
(74) Vertreter: Grünecker Patent- und Rechtsanwälte PartG mbB

(56) Entgegenhaltungen:
- EP-A1- 1 176 416
- WO-A2-2006/011803
- WO-A2-2008/140473
- DE-U1- 9 415 768
- US-B1- 6 433 338

## Beschreibung

Die Erfindung bezieht sich auf eine Vorrichtung zur Inspektion von Behältern auf Restflüssigkeit, der im Oberbegriff von Anspruch 1 erläuterten Art und auf ein entsprechendes Verfahren gemäß dem Oberbegriff des Anspruches 10.

Eine Vorrichtung und ein Verfahren dieser Art ist aus der EP-A-618 444 bekannt. Die bekannte Vorrichtung und das bekannte Verfahren arbeiten mit einer Paarung aus Sender und Empfänger, die im Infrarot-Bereich arbeiten. Dabei sind eine Mehrzahl von Sender-Empfänger-Paarungen vorgesehen, wobei eine der Paarungen ein durch die Behältermündung in die Flasche und auf den Boden des Behälters einstrahlende Beleuchtungseinrichtung und einen schräg unterhalb des Bodens angeordneten Empfänger enthält, der vom Flaschenboden reflektierte Strahlung empfängt, die durch die Reflexion am Flaschenboden durch einen Bereich geschickt wurde, der sich zwischen der Wölbung des Flaschenbodens und der Behälterwandung erstreckt und in der sich Restflüssigkeit notwendigerweise ansammelte. Der Empfänger ist mit einer Auswerteinrichtung versehen, mit deren Hilfe festgestellt werden kann, ob die aufgefangene Lichtstrahlung darauf hindeutet, dass Lichtanteile von einer im Behälter vorhandenen Restflüssigkeit absorbiert wurde. Bei der bekannten Vorrichtung können eine Mehrzahl von Durchleuchtungsbereichen vorgesehen werden. Eine der Beleuchtungsbereiche kann beispielsweise direkt am Behälterboden angeordnet sein, wobei hier nur ein weiterer Empfänger notwendig ist, der von der durch die Flaschenmündung einstrahlenden Beleuchtungseinrichtung versorgt wird. Weitere Beleuchtungsbereiche mit zugeordneten Sender-Empfänger-Paarungen können im Bereich der Behälterwandung, radial oder schräg von oben nach unten, vorgesehen sein. Zusätzlich zur Erkennungsmöglichkeit von Restflüssigkeit können auch Fremdkörper oder Farben im Behälter festgestellt werden. Als Beleuchtungseinrichtung können eine oder mehrere Infrarotdioden eingesetzt werden, wobei jedoch die Mehrzahl der Dioden messtechnisch wie eine einzelne Diode behandelt wird. Nachteilig dieser Ausgestaltung ist die Tatsache, dass die Restflüssigkeit nur von einem reflektierten Lichtstrahl durchquert wird, wobei der Anteil und die Richtung der Reflexion am Behälterboden stark von den Verhältnissen am Behälterboden, beispielsweise dem Reflexionswinkel, abhängt, so dass hier eine große Fehlerquelle vorhanden ist. Darüber hinaus können mit herkömmlichem Infrarotlicht Verunreinigungen, wie beispielsweise ölige Substanzen, nicht festgestellt werden. Schließlich funktioniert die bekannte Vorrichtung nur bei Behältern einer einzigen Form und Geometrie, auf die die Vorrichtung eingestellt wurde. Beim Wechsel auf Behälter anderer Formen und Abmessungen muss insbesondere der Empfänger auf die neuen Reflexionswinkel eingestellt werden.

Es ist weiterhin bekannt, beispielsweise aus der DE-A-27 38 571 oder der DE-C-195 12 124, die Beleuchtung unterhalb des Behälterbodens und dem Empfänger oberhalb der Flaschenmündung anzuordnen. Um Messwerte auch aus dem Übergangsbereich zwischen dem gewölbten Behälterboden und der Wandung zu erreichen, wird beispielsweise in der DE 27 38 571 eine Streuscheibe eingesetzt, die das Licht parallel zur Längsachse des Behälters ausrichtet, oder der Empfänger enthält eine Optik (DE 195 12 124), die die aus der Flaschenmündung austretenden Durchleuchtungsstrahlen parallel zur Längsachse des Behälters ausrichtet.

Die WO 2006/011803 A2 offenbart eine Vorrichtung und ein Verfahren zum Prüfen von Behältern.

Die WO 2008/140473 A2 offenbart ein optisches System und ein Verfahren zur Inspektion und Charakterisierung von Flüssigkeiten in Behältern.

Die DE 94 15 768 U1 offenbart eine Vorrichtung zum Überprüfen von Flaschen auf Normabweichungen in Form von Beschädigungen und/oder Fremdkörpern.

Der Erfindung liegt die Aufgabe zugrunde, eine Vorrichtung und ein Verfahren der bekannten Art einfacher und zuverlässiger auszugestalten.

Die Aufgabe wird bei einer Vorrichtung durch die Merkmale des Anspruches 1 und bei einem Verfahren durch die Merkmale des Anspruches 10 gelöst.

Erfindungsgemäß enthält die Beleuchtungseinrichtung eine breitbandige Strahlungsquelle mit einem Spektrum umfassend einen Wellenlängenbereich von 1 µm bis 3 µm als Lichtquelle. Es sind mehrere Empfänger mit jeweils einem schmalbandigen Filter für einen bestimmten Wellenlängenbereich und jeweils einen Sensor vorgesehen.

Ein weiterer Vorteil ist, eine erfindungsgemäße Vorrichtung bereit zu stellen, welche mindestens einen Empfänger aufweist, der unterschiedliche Wellenlängen von einer Beleuchtungseinrichtung empfangen kann. Die Beleuchtungseinrichtung enthält vorzugsweise breitbandige Leuchtdioden als Lichtquelle. Bei dem Empfänger handelt es sich bevorzugt um einen Empfänger, der eine Mehrzahl an Vorrichtungen, vorzugsweise Filter, in Strahlungsrichtung verlaufend vorgelagert, aufweist. Die Filter sind derart ausgestaltet, dass aus einem breitbandigen Spektrum jeweils in ein schmalbandiges Spektrum umgewandelt werden kann, sodass auch hier unterschiedliche Wellenlängen gezielt auf das Absorptionsspektrum der festzustellenden Verunreinigungen/ Restmengen abgestimmt werden können.

Eine besonders konstruktiv und steuerungstechnisch einfache Lösung ist es, die Lichtquellen selektiv an- und abschaltbar zu machen.

Denkbar ist, dass eine Mehrzahl unabhängig voneinander angeordneten und unabhängig voneinander ansteuerbaren Lichtquellen vorgesehen sind, um die Anpassungsfähigkeit der Vorrichtung und des Verfahrens an die unterschiedlichen betrieblichen Gegebenheiten, insbesondere die unterschiedlichen Formen bzw. Abmessungen von zu inspizierenden Behältern zu verbessern. Die Ansteuerbarkeit der Lichtquellen kann sowohl über eine entsprechende Steuerung des Empfängers als auch über eine entsprechende Steuerung der Lichtquellen bewirkt werden.

Von besonderem Vorteil ist es, wenn die Lichtquellen unabhängig voneinander abfragbar sind, sei es, dass der Empfänger gezielt gerichtet eine Lichtquelle ansteuert oder sei es, dass die Lichtquelle selektiv ab- und angeschaltet werden kann.

Einen weiteren Vorteil bietet die erfindungsgemäße Vorrichtung durch die Tatsache, dass Lichtquellen eingesetzt werden können, die mit unterschiedlicher Wellenlänge abstrahlen. Dadurch können die Lichtquellen gezielt auf das Absorptionsspektrum der festzustellenden Verunreinigungen/Restmengen abgestimmt werden, so dass beispielsweise neben einer wässrigen Flüssigkeit (mit mehr oder weniger starker Verunreinigung durch die unterschiedlichsten Stoffe), beispielsweise auch Öle festgestellt werden können, die mit Inspektionsvorrichtungen, die lediglich Infrarot verwenden, nicht festgestellt werden können.

Die Beleuchtungseinrichtung der erfindungsgemäßen Vorrichtung enthält bevorzugt schmalbandige Leuchtdioden als Lichtquellen, wobei Leuchtdioden einerseits wegen ihrer geringen Größe und andererseits wegen der Möglichkeit, Leuchtdioden speziell nach dem ausgestrahlten Wellenbereich auszusuchen, bevorzugt sind.

Die Anordnung der Lichtquellen erfolgt entweder in Reihe nebeneinander oder im Kreis, dann jedoch bevorzugt in einer Mehrzahl konzentrischer Kreise.

Der Empfänger sollte bevorzugt so ausgewählt sein, dass sein Wirkungsbereich über die Hälfte eines Behälterbodens reicht, wenn der Durchleuchtungsbereich am Behälterboden angeordnet ist.

Ein Ausführungsbeispiel der Erfindung wird nachfolgend anhand der Zeichnungen näher erläutert. Es zeigen:
- Fig. 1: eine schematische Darstellung einer erfindungsgemäßen Vorrichtung zur Inspektion von Behältern, und
- Fig. 2: eine Darstellung von Absorptionsspektren zur Auswahl bevorzugter Wellenlängen der Lichtquellen, und
- Fig. 3: eine schematische Darstellung einer weiteren erfindungsgemäßen Vorrichtung zur Inspektion von Behältern, und
- Fig. 4: ein Ausführungsbeispiel eines Empfängers mit Filtern.

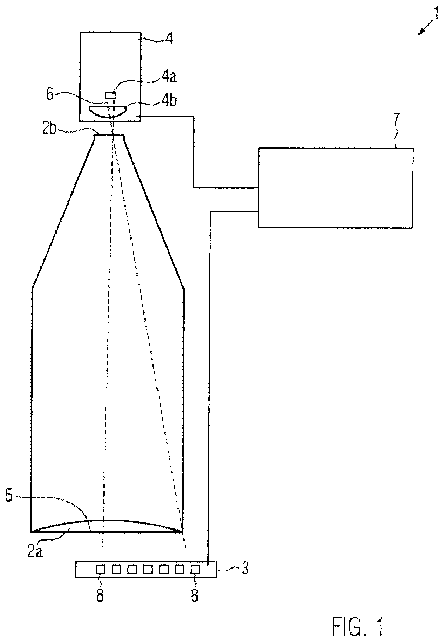

Fig. 1 zeigt in schematischer Darstellung eine Vorrichtung 1 zur Inspektion von Behältern 2, die hier als schematische Flaschen dargestellt sind. Die Behälter 2 bestehen aus einem transparenten bzw. zumindest teilweise transparenten Material, wie beispielsweise die üblicherweise verwendeten Kunststoffe (PET oder dgl.) oder auch Glas.

Der Behälter 2 wird in üblicher und nicht gezeichneter Darstellung durch die Inspektionsvorrichtung 1 gefördert und während des Durchlaufens der Vorrichtung 1 auf Restflüssigkeit (Wasser, Lauge, Öle), Verunreinigungen, Fremdkörper oder dgl. inspiziert.

Die Vorrichtung 1 enthält eine übliche Paarung aus einem Lichtsender, bevorzugt für Licht im Infrarotbereich, in Form einer Beleuchtungseinrichtung 3 und einem Empfänger 4. Im dargestellten Ausführungsbeispiel ist die Beleuchtungseinrichtung 3 unterhalb eines Bodens 2a des Behälters 2 angeordnet, während der Empfänger 4 oberhalb der Mündungsöffnung 2b des Behälters angeordnet ist, so dass er die von der Beleuchtungseinrichtung 3 durch den Behälterboden 2a in den Behälter 2 geschickten und durch die Behälteröffnung 2b austretenden Strahlen empfängt.

Im dargestellten Ausführungsbeispiel sind die Beleuchtungseinrichtung 3 und der Empfänger 4 so ausgebildet, dass sich ein Durchleuchtungsbereich 5 ergibt, der über den halben Durchmesser des Bodens 2a reicht. Entsprechend der Größe und Anordnung des Durchleuchtungsbereiches 5 hat der Empfänger 4 einen Wirkungsbereich 6, der in der Lage ist, den Beleuchtungsbereich 5 abzudecken.

Die Beleuchtungseinrichtung 3 und der Empfänger 4 sind mit einer Steuereinrichtung 7 verbunden, mit der außer den nachfolgend noch beschriebenen Verfahrensschritten, auch die Auswertung der vom Empfänger 4 aufgefangenen Signale erfolgt, wobei das Grundprinzip aus den aufgefangenen Signalen die absorbierten Lichtanteile festzustellen und aus diesen auf das Vorhandensein einer Restflüssigkeit, einer Verschmutzung, eines Fremdkörpers oder dgl. zu schließen, beibehalten wird.

Die Beleuchtungseinrichtung 3 enthält eine Mehrzahl von Lichtquellen 8, die im bevorzugten Ausführungsbeispiel als Leuchtdioden und insbesondere als schmalbandige Leuchtdioden, d.h. Leuchtdioden, die eine Lichtstrahlung in einem eng begrenzten Wellenbereich aussenden, eingesetzt werden. Die Lichtquellen 8 sind über den Durchleuchtungsbereich 5, d.h. hier einen radialen Streifen über den Behälterboden 2a, mit Abstand zueinander verteilt angeordnet. Die Anordnung kann in Form einer Reihe (wie gezeigt) oder in Form eines Kreises, bevorzugt einer Mehrzahl konzentrischer Kreise, erfolgen. Die Anordnung und der Abstand untereinander zwischen den Lichtquellen 8 ist so bemessen, dass die Strahlung jeder Lichtquelle 8 selektiv vom Empfänger 4 feststellbar ist. Bevorzugt enthält die Beleuchtungseinrichtung 3 fünf bis zehn, insbesondere acht bis zehn LEDs.

Der Empfänger 4 weist einen oder mehrere Sensoren 4a und eine Optik 4b auf, die dafür sorgt, dass die aus der Behältermündung 2b austretenden Strahlen in den Sensor oder die Sensoren 4a geleitet werden.

Die Beleuchtungseinrichtung 3 kann Lichtquellen 8 gleicher Art oder unterschiedlicher Art enthalten, die selektiv dauerhaft oder gepulst angeschaltet bzw. selektiv abgeschaltet werden können.

Wenn lediglich notwendig ist, dass Verbleiben von Restflüssigkeit in der Flasche 2 festzustellen, so können die Lichtquellen 8 von gleicher Art sein, die von der Steuereinrichtung 7 selektiv an- und abschaltbar sind. Auf diese Weise ist es möglich, nur diejenige Lichtquelle 8 einzuschalten und zur Messung zu verwenden, die auf einen Bereich des Behälters 2 gerichtet ist, in dem sich auf jeden Fall Restflüssigkeit befindet, wenn überhaupt Restflüssigkeit im Behälter 2 vorhanden ist, d.h. auf den tiefsten Bereich bei normaler (senkrechter) Förderausrichtung der Behälter. Dies ist bei Behältern mit gewölbtem Boden, wie die in Fig. 1 dargestellte Flasche, die tiefste Stelle, d.h. der Übergangsbereich zwischen dem Bodendom und der sich nach oben anschließenden Seitenwandung. Dadurch kann die Vorrichtung 1 auf einfache Weise an jede gewünschte Behältergeometrie, insbesondere jeden Behälterdurchmesser und jede Bodenform angepasst werden.

Sollen möglichst viele Verunreinigungen im Behälter festgestellt und gegebenenfalls auch nach ihrer Natur identifiziert werden, so kommen Lichtquellen zum Einsatz, die in wenigstens zwei Wellenbereichen strahlen. Beispielsweise könnten Lichtquellen unterschiedlicher Wellenlänge zu jeweils einer Gruppe zusammengefasst werden und diese Gruppe in der in Fig. 1 für Einzellichtquellen gezeigten Weise angeordnet werden. Es ist jedoch auch möglich, Lichtquellen mit unterschiedlichen Wellenlängen abwechselnd anzuordnen. Auch hier kann jede einzelne Lichtquelle, egal ob innerhalb einer Gruppe oder als Einzelquelle, selektiv angesteuert werden, was bevorzugt durch ein An- und Abschalten geschieht. Auf diese Weise können nacheinander oder gleichzeitig Lichtstrahlen unterschiedlicher Wellenlängen ausgesandt werden, so dass unterschiedliche Inhaltsstoffe festgestellt und ihrer Art nach identifiziert werden können.

So deckt beispielsweise der Sensor 4a des Empfängers 4 spektral einen Bereich von ca. 1,5 µm bis 2,0 µm ab. Mit diesem Empfänger werden Leuchtdioden mit zwei oder mehr verschiedenen Wellenlängen in diesem Bereich eingesetzt, die bei der Messung zeitlich hintereinander an- und abgeschaltet werden. Dadurch können die charakteristischen Spektren verschiedener Flüssigkeiten ideal voneinander und vom Behältermaterial unterschieden werden. Alternativ wäre es auch möglich, die Empfindlichkeit des Empfängers 4 für verschiedene Wellenlängen einzustellen, so dass die nicht-absorbierten Lichtanteile der verschiedenen Wellenlängen voneinander getrennt werden können.

Anschließend erfolgt die Auswertung der vom Empfänger 4 empfangenen Signale, was insbesondere ein Vergleich mit einen Sollwert ist, der die nicht- absorbierten Lichtanteile darstellt, wie sie den Durchleuchtungsbereich 5 passieren, wenn keine Verschmutzung und keine fremden Inhaltsstoffe im Behälter 2 vorhanden sind, d.h. die Absorption des reinen Behältermaterials definiert.

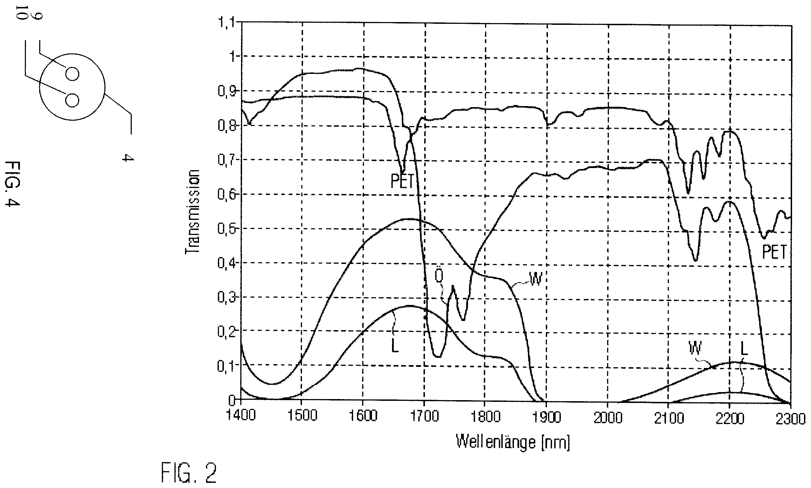

Fig. 2 zeigt die nicht-absorbierten Lichtanteile bei einer Durchleuchtung mit verschiedenen Wellenlängen für ein reines Behältermaterial (PET), Öl Ö (Mittelwert aus verschiedenen Ölen), reines Wasser W und verschmutzte Lauge L. Anhand dieser Kurven können entsprechende Lichtquellen einfach ausgewählt werden.

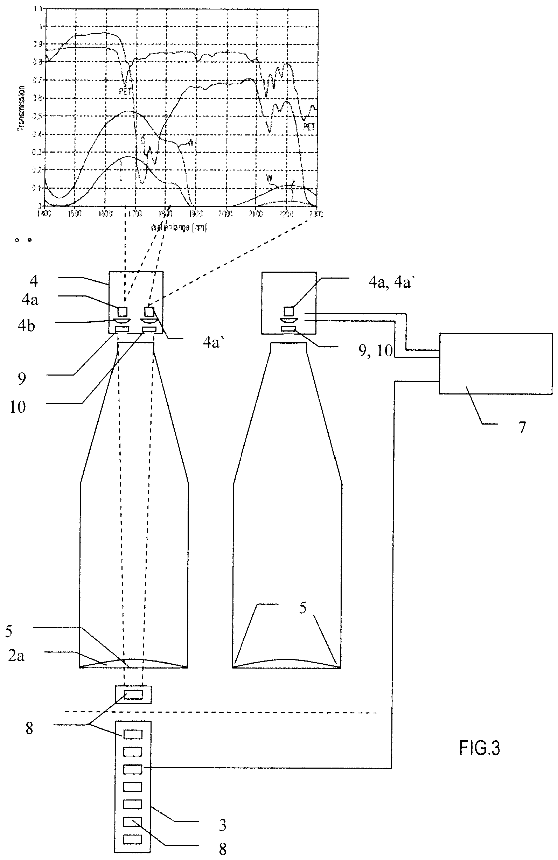

Fig. 3 zeigt eine schematische Darstellung einer weiteren Vorrichtung zur Inspektion von Behältern 2. Dabei entspricht dieses Ausführungsbeispiel in wesentlichen Teilen der Vorrichtung aus Fig. 1. Somit gelten die bereits zuvor gemachten Erläuterungen analog zu dieser Ausführung. Unterschiede zur Ausführung in Fig. 1 bestehen bei der eingesetzten Beleuchtungseinrichtung 3 und den zugehörigen Empfänger 4.

Die Beleuchtungseinrichtung 3 enthält eine Mehrzahl von Lichtquellen 8, die im bevorzugten Ausführungsbeispiel als Leuchtdioden und insbesondere als breitbandige Leuchtdioden, d.h. Leuchtdioden, die eine Lichtstrahlung in einem weiten Wellenbereich aussenden, eingesetzt werden. Die Lichtquellen 8 sind über den Durchleuchtungsbereich 5, d.h. hier einen radialen Streifen über den Behälterboden 2a, mit Abstand zueinander verteilt angeordnet. Die Anordnung kann in Form einer Reihe (wie gezeigt) oder in Form eines Kreises, bevorzugt einer Mehrzahl konzentrischer Kreise, erfolgen. Die Anordnung und der Abstand untereinander zwischen den Lichtquellen 8 sind so bemessen, dass die Strahlung jeder Lichtquelle 8 selektiv vom Empfänger 4 feststellbar ist. Bevorzugt enthält die Beleuchtungseinrichtung 3 fünf bis zehn, insbesondere acht bis zehn LEDs.

Der Empfänger 4 hat, in Strahlungsrichtung verlaufend, Filter 9, 10 vorgelagert. Diese Filter 9, 10 können das von der Beleuchtungseinrichtung 3 ausgestrahlte breitbandige Spektrum in ein schmalbandiges Spektrum umwandeln. Dabei empfängt der Empfänger 4 über einen ersten Sensor 4a und einen ersten schmalbandigen Filter 9 ein erstes Spektrum, d.h. also eine Wellenlänge in einem ersten Bereich von vorzugsweise 1,65µm - 1.8µm. Weiterhin empfängt der Empfänger über einen zweiten Sensor 4a' und einen zweiten schmalbandigen Filter 10 ein zweites Spektrum, d.h. also eine Wellenlänge in einem zweiten, vorzugsweise unterschiedlichen, Bereich von bevorzugt 1,8µm - 2,3µm. Dadurch können hiermit die charakteristischen Spektren verschiedener Flüssigkeiten ideal voneinander und vom Behältermaterial unterschieden werden.

Auch hier erfolgt anschließend die Auswertung der von dem Empfänger 4 empfangenen Signale, ebenfalls insbesondere mit Hilfe eines Vergleiches mit einem Sollwert.

Die mindestens zwei Sensoren 4a, 4a' und die mindestens zwei Filter 9, 10 sind bei diesem Ausführungsbeispiel in einem Empfängergehäuse untergebracht. Es sind aber auch mehrere Empfänger 4 mit jeweils einem Sensor 4a, 4a' und einem Filter 9,10 denkbar.

Die Steuerung 7 übernimmt neben der Auswertung der Messsignale vom Empfänger 4 und die selektive Ansteuerung der Lichtquellen 8 auch die Synchronisierung der Messung mit der Bewegung der Behälter entlang ihres Transportweges oder dgl..

Fig. 4 zeigt einen Empfänger 4 mit zwei Filtern 9, 10 in einem Empfängergehäuse gemäß dem Ausführungsbeispiel aus Fig. 3.

In Abwandlung des beschriebenen und bezeichneten Ausführungsbeispiels können andere geeignete Lichtquellen oder Strahlungsquellen eingesetzt werden. Auch die umgekehrte Anordnung, Beleuchtungseinrichtung oben und Empfänger unten, ist denkbar. Der Durchleuchtungsbereich kann auch an anderen Stellen der Behälterwandung vorgesehen sein. Auch ist unter Umständen denkbar, einen Empfänger einzusetzen, der in der Lage ist, die einzelnen Lichtquellen selektiv und ohne Beeinflussung durch die anderen Lichtquellen zu erfassen. Die beschriebenen konstruktiven und steuerungstechnischen Einzelheiten können nach Bedarf kombiniert oder untereinander ausgetauscht werden.

## Patentansprüche

1. Vorrichtung (1) zur Inspektion von Behältern (2) auf Restflüssigkeit, mit einer Beleuchtungseinrichtung (3) und einem Empfänger (4), die auf einander gegenüberliegenden Seiten eines Durchleuchtungsbereiches (5) eines Behälterbodens (2a), angeordnet sind, sowie mit einer Einrichtung (7) zum Auswerten der vom Empfänger (4) festgestellten Signale,
**dadurch gekennzeichnet,**
**dass** die Beleuchtungseinrichtung (3) eine breitbandige Strahlungsquelle mit einem Spektrum umfassend einen Wellenlängenbereich von 1 µm bis 3 µm als Lichtquelle (8) enthält, und
**dass** mehrere Empfänger (4) mit jeweils einem schmalbandigen Filter (9, 10) für einen bestimmten Wellenlängenbereich und jeweils einem Sensor (4a, 4a') vorgesehen sind.

2. Vorrichtung nach Anspruch 1, **dadurch gekennzeichnet, dass** die Beleuchtungseinrichtung (3) eine Mehrzahl getrennt voneinander über den Durchleuchtungsbereich (5) verteilter und unabhängig voneinander ansteuerbarer Lichtquellen (8) enthält.

3. Vorrichtung nach Anspruch 2 **dadurch gekennzeichnet, dass** die Lichtquellen (8) unabhängig voneinander abfragbar sind.

4. Vorrichtung nach Anspruch 2 oder 3, **dadurch gekennzeichnet, dass** die Lichtquellen (8) unabhängig voneinander an- und abschaltbar sind.

5. Vorrichtung nach einem der Ansprüche 2 bis 4, **dadurch gekennzeichnet, dass** die Beleuchtungseinrichtung (3) Lichtquellen (8) mit wenigstens zwei unterschiedlichen Wellenlängen aufweist.

6. Vorrichtung nach einem der Ansprüche 1 bis 5, **dadurch gekennzeichnet, dass** der Empfänger (4) einen Wirkungsbereich (6) aufweist, der über die Hälfte eines Behälterbodens (2a) reicht.

7. Vorrichtung nach einem der Ansprüche 2 bis 6, **dadurch gekennzeichnet, dass** die Lichtquellen (8) in wenigstens einer Reihe über den Durchleuchtungsbereich (5) verteilt angeordnet sind.

8. Vorrichtung nach einem der Ansprüche 2 bis 6, **dadurch gekennzeichnet, dass** die Lichtquellen (8) in wenigstens einer kreisförmigen Anordnung, bevorzugt in einer Mehrzahl konzentrischer Kreise, über den Durchleuchtungsbereich (5) verteilt angeordnet sind.

9. Vorrichtung nach einem der Ansprüche 1 bis 4, **dadurch gekennzeichnet, dass** die Beleuchtungseinrichtung (3) breitbandige Leuchtdioden als Lichtquellen (8) enthält.

10. Verfahren zur Inspektion von Behältern auf Restflüssigkeit, wobei ein Durchleuchtungsbereich (5) am Behälterboden (2a) durchleuchtet und die absorbierten Lichtanteile festgestellt werden,
**dadurch gekennzeichnet,**
**dass** eine Beleuchtungseinrichtung (3) mit einer breitbandigen Strahlungsquelle ein Spektrum in einem Wellenlängenbereich von 1µm bis 3 µm Licht abstrahlt, und
**dass** mehrere Empfänger (4) mit jeweils einem schmalbandigen Filter (9, 10) für einen bestimmten Wellenlängenbereich und jeweils einem Sensor (4a, 4a') vorgesehen sind.

11. Verfahren nach Anspruch 10, **dadurch gekennzeichnet, dass** im Durchleuchtungsbereich (5) zum Feststellen der absorbierten Lichtanteile unterschiedliche Wellenlängen berücksichtigt werden.

## Claims

1. Device (1) for inspecting containers (2) for residual liquid, comprising an illumination device (3) and a receiver (4) which are arranged on mutually opposite sides of a transillumination region (5) of a container base (2a), and comprising a device (7) for evaluating the signals detected by the receiver (4),
**characterised in that**
the illumination device (3) contains a broadband radiation source with a spectrum comprising a wavelength range from 1 µm to 3 µm as the light source (8), and
**in that** a plurality of receivers (4), each having a narrow-band filter (9, 10) for a specific wavelength range and each having a sensor (4a, 4a'), are provided.

2. Device according to claim 1, **characterised in that** the illumination device (3) contains a plurality of light sources (8) which are distributed over the transillumination region (5) so as to be separate from one another and can be controlled independently of one another.

3. Device according to claim 2, **characterised in that** the light sources (8) can be polled independently of one another.

4. Device according to either claim 2 or claim 3, **characterised in that** the light sources (8) can be switched on and off independently of one another.

5. Device according to any of claims 2 to 4, **characterised in that** the illumination device (3) has light sources (8) with at least two different wavelengths.

6. Device according to any of claims 1 to 5, **characterised in that** the receiver (4) has a range of effectiveness (6) which extends over half of a container base (2a).

7. Device according to any of claims 2 to 6, **characterised in that** the light sources (8) are distributed over the transillumination region (5) in at least one row.

8. Device according to any of claims 2 to 6, **characterised in that** the light sources (8) are distributed over the transillumination region (5) in at least one circular arrangement, preferably in a plurality of concentric circles.

9. Device according to any of claims 1 to 4, **characterised in that** the illumination device (3) contains broadband light-emitting diodes as light sources (8).

10. Method for inspecting containers for residual liquid, in which a transillumination region (5) on the container base (2a) is transilluminated and the absorbed light components are detected, **characterised in that**
an illumination device (3) comprising a broadband radiation source a spectrum in a wavelength range of 1 µm to 3 µm emits light, and
**in that** a plurality of receivers (4), each having a narrow-band filter (9, 10) for a specific wavelength range and each having a sensor (4a, 4a'), are provided.

11. Method according to claim 10, **characterised in that** different wavelengths are taken into account in the transillumination region (5) in order to detect the absorbed light components.

## Revendications

1. Dispositif (1) permettant l'inspection de récipients (2) à la recherche de liquide résiduel, comprenant un dispositif d'éclairage (3) et un récepteur (4) qui sont agencés sur des côtés opposés d'une zone de mirage (5) d'un fond de récipient (2a), et comprenant un dispositif (7) permettant l'évaluation des signaux constatés par le récepteur (4),
**caractérisé en ce que**,
le dispositif d'éclairage (3) contient une source de rayonnement à large bande avec un spectre comprenant une plage de longueurs d'onde comprise entre 1 µm et 3 µm, faisant office de source de lumière (8), et
plusieurs récepteurs (4) sont prévus, qui sont munis respectivement d'un filtre à bande étroite (9, 10) pour une plage de longueurs d'onde déterminée et respectivement d'un capteur (4a, 4a').

2. Dispositif selon la revendication 1, **caractérisé en ce que** le dispositif d'éclairage (3) contient une pluralité de sources lumineuses (8) réparties de manière séparée les unes des autres sur la zone de mirage (5) et pouvant être commandées indépendamment les unes des autres.

3. Dispositif selon la revendication 2, **caractérisé en ce que** les sources lumineuses (8) peuvent être sollicitées indépendamment les unes des autres.

4. Dispositif selon la revendication 2 ou 3, **caractérisé en ce que** les sources lumineuses (8) peuvent être allumées et éteintes indépendamment les unes des autres.

5. Dispositif selon l'une quelconque des revendications 2 à 4, **caractérisé en ce que** le dispositif d'éclairage (3) présente des sources lumineuses (8) correspondant à au moins deux longueurs d'onde différentes.

6. Dispositif selon l'une quelconque des revendications 1 à 5, **caractérisé en ce que** le récepteur (4) présente une zone d'action (6) qui s'étend au-delà de la moitié d'un fond de récipient (2a).

7. Dispositif selon l'une quelconque des revendications 2 à 6, **caractérisé en ce que** les sources lumineuses (8) sont agencées sur la zone de mirage (5) de manière répartie sur au moins une rangée.

8. Dispositif selon l'une quelconque des revendications 2 à 6, **caractérisé en ce que** les sources lumineuses (8) sont agencées sur la zone de mirage (5) de manière répartie selon au moins un agencement circulaire, de manière préférée en une pluralité de cercles concentriques.

9. Dispositif selon l'une quelconque des revendications 1 à 4, **caractérisé en ce que** le dispositif d'éclairage (3) contient des diodes électroluminescentes à large bande faisant office de sources lumineuses (8).

10. Procédé permettant l'inspection de récipients à la recherche de liquide résiduel, dans lequel une zone de mirage (5) est mirée au niveau du fond de récipient (2a) et les composantes de lumière absorbées sont constatées,
**caractérisé en ce que**,
un dispositif d'éclairage (3) contenant une source de rayonnement à large bande émet de la lumière dont le spectre correspond à une plage de longueurs d'onde comprise entre 1 µm et 3 µm, et
plusieurs récepteurs (4) sont prévus, qui sont munis respectivement d'un filtre à bande étroite (9, 10) pour une plage de longueurs d'onde déterminée et respectivement d'un capteur (4a, 4a').

11. Procédé selon la revendication 10, **caractérisé en ce que** différentes longueurs d'onde sont prises en compte dans la zone de mirage (5) afin de constater les composantes de lumière absorbées.
